# FASCICULE DE BREVET EUROPEEN

(11) **EP 1 375 375 B1**
(45) Date de publication et mention de la délivrance du brevet: **02.01.2008**
(21) Numéro de dépôt: 03291263.6
(22) Date de dépôt: 27.05.2003
(51) Int. Cl.: B65D 47/42

(54) **Embout applicateur**
Applikatorspitze
Applicator tip

(30) Priorité: 20.06.2002 FR 0207641
(43) Date de publication de la demande: 02.01.2004
(73) Titulaire: L'ORÉAL, 75008 Paris (FR)
(72) Inventeur: Thiebaut, Laure, 92110 Clichy (FR)
(74) Mandataire: Leray, Noelle

(56) Documents cités:
- EP-A- 0 849 186
- WO-A-01/26824
- FR-A- 826 175
- FR-A- 2 534 885
- FR-A- 2 635 086

## Description

La présente invention se rapporte à un embout d'application de produit crémeux ou pâteux ayant une surface d'application rigide sous forme de dôme, servant d'élément applicateur du produit sur la surface devant recevoir le produit.

Plus précisément, la présente invention se rapporte à un embout d'application de pâte, crème ou gel, notamment un embout d'application destiné à l'application, par voie topique, sur la peau d'un utilisateur d'un produit à action cosmétique ou dermopharmaceutique, tel qu'une crème déodorante, parfumante, amincissante ou épilatoire, une crème pour le visage, ou encore un gel pour traiter le cuir chevelu.

Dans le cas particulier de produit déodorant ou antitranspirant, il existe différents types de dispositifs permettant d'assurer l'application du produit. Le produit peut par exemple être appliqué au moyen d'un bâton solide, dit "raisin", contenant l'actif à appliquer sur la peau de l'utilisateur. Le produit peut également être appliqué par des dispositifs de type aérosol qui distribuent le produit sous forme de spray ou encore au travers d'un dôme distributeur réalisé en un matériau poreux rigide servant d'élément applicateur. Il existe aussi des dispositifs à bille dans lesquels la bille est montée en rotation au-dessus d'un récipient contenant le produit de sorte qu'elle est, d'une part, en partie en contact avec le produit à l'intérieur du récipient et sert, d'autre part, de surface d'application. Enfin, il existe des applicateurs formés d'un tube à parois déformables qui se terminent par un dôme applicateur muni d'orifices de sortie du produit. De tels applicateurs sont par exemple décrits dans les demandes de brevet EP-A-0 849 186, FR-A-2 534 885 ou encore FR-A-2 635 086.

En particulier, les demandes de brevet EP-A-0 849 186, FR-A-2 534 885 décrivent un tube à parois compressibles à une extrémité duquel est soudée une tête en forme de dôme qui forme une surface d'application. Le dôme est traversé par un ou plusieurs orifices de distribution débouchant à la surface d'application. De telles têtes de tube ont une forme leur permettant d'être démoulées, car les orifices s'étendent sur une surface inférieure à la surface de la section transversale la plus petite du dôme. Elles peuvent donc être réalisées à partir d'une seule pièce par exemple par un procédé de moulage ou de compression.

Toutefois, pour fabriquer les tubes qui viennent d'être décrits, il est nécessaire de modifier l'équipement de fabrication des tubes à tête classique pour l'adapter à la fabrication d'un tube muni d'une tête en forme de dôme, ce qui n'est pas très rentable d'un point de vue économique. Il est en effet plus intéressant économiquement d'utiliser des tubes à tête classique sur lesquels on vient fixer un dôme applicateur.

C'est pourquoi la demande de brevet FR-A-2 635 086 décrit un tube à parois compressibles sur lequel est soudée, non pas une tête en forme de dôme applicateur, mais une tête classique munie d'un col fileté sur lequel vient se fixer un applicateur. Dans un des modes de réalisation décrits, l'applicateur est formé par une paroi externe délimitant en partie une surface d'application bombée. La surface d'application est traversée par un orifice de sortie du produit qui est en communication avec l'intérieur du tube. L'applicateur comprend en outre une jupe de fixation filetée sur sa paroi intérieure de manière à être vissée sur le col du tube. Enfin, l'applicateur comprend une jupe qui vient en butée sur la tête du tube et qui permet de guider le produit depuis le tube jusqu'à l'orifice. Avec un tel applicateur, l'orifice de distribution doit obligatoirement déboucher à l'intérieur de la jupe de guidage pour pouvoir communiquer avec l'intérieur du récipient. La zone de la surface d'application dans laquelle l'orifice de sortie du produit peut être formé est donc limitée, puisqu'elle correspond à la section transversale de la jupe de guidage.

Par ailleurs, le brevet FR 826 175 décrit un récipient distributeur comportant un chapeau distributeur qui comprend une chambre de répartition. La chambre de répartition est formée par plusieurs pièces collées ou serties entre elles ce qui ne garantit pas une bonne étanchéité de la chambre de répartition.

Aussi, est-ce un des objets de l'invention que de réaliser un embout applicateur qui peut être monté sur un tube de forme classique contenant le produit.

C'est un autre objet de l'invention que de réaliser un embout applicateur simple à réaliser et à faible coût.

C'est encore un autre objet de l'invention que de réaliser un embout applicateur qui comprend une surface d'application sur l'ensemble de laquelle le produit peut facilement se répartir.

C'est en particulier un objet de l'invention que de réaliser un embout applicateur qui permet, en un seul passage, une application correcte du produit sur la surface sur laquelle le produit doit être déposé.

Selon l'invention, ces objets sont atteints en réalisant un embout d'application tel que défini dans la revendication 1.
- des moyens de fixation destinés à fixer l'embout sur le récipient ;
- une portion applicatrice comportant une chambre de répartition délimitant au moins en partie une surface d'application, et étant apte à communiquer avec l'intérieur du récipient, via un passage d'entrée d'axe X, ladite chambre étant en outre munie d'au moins un orifice de sortie du produit, débouchant sur la surface d'application, et d'axe distinct de l'axe du passage d'entrée, la portion applicatrice étant obtenue de moulage à partir d'une seule pièce.

Ainsi, l'embout selon l'invention permet de conduire le produit depuis le récipient à partir d'un passage de section relativement limitée, notamment limitée à la section du col du récipient, et de facilement le répartir sur une surface d'application relativement grande. En particulier, la présence de la chambre de répartition permet d'augmenter la zone de la surface d'application dans laquelle peut déboucher l'orifice de sortie si bien que l'on peut utiliser plusieurs orifices de sortie espacés les uns des autres sur la surface d'application. La position des orifices de sortie ne dépend donc pas de la configuration du passage guidant le produit dans l'embout à partir du récipient. Un tel embout peut donc être monté sur un tube à tête classique munie d'un col fileté. En outre, l'embout peut être facilement réalisé.

La surface d'application est de préférence bombée afin de s'adapter à la surface sur laquelle elle est destinée à être appliquée, notamment les aisselles.

Les moyens de fixation de l'embout sont constitués par une jupe de fixation cylindrique destinée à être fixée sur le récipient. La jupe de fixation comprend en particulier un filetage sur sa paroi intérieure destiné à coopérer avec un filetage prévu sur la paroi extérieure du récipient, notamment sur un col formé à une extrémité du récipient.

Le passage d'entrée du produit dans la chambre est avantageusement entouré par une jupe d'étanchéité destinée à s'insérer dans une ouverture du récipient, notamment dans le col du récipient.

L'embout est d'axe longitudinal X et sa section transversale est de forme sensiblement ovale. Ainsi, la forme de l'embout est adaptée aux aisselles et permet une application en un seul passage, contrairement à un embout de section transversale circulaire qui nécessite plusieurs passages pour bien couvrir l'ensemble de l'aisselle.

L'embout comprend avantageusement au moins deux orifices de sortie de sorte que le produit se répartit plus facilement sur l'ensemble de la surface d'application. En particulier, les orifices de sortie du produit sont formés le long du plus grand axe de la section transversale ovale de la surface d'application.

L'embout peut être obtenu de moulage d'un matériau thermoplastique à partir d'une seule pièce. En particulier le matériau thermoplastique est choisi parmi les polypropylènes, les polyéthylènes, les polyéthylènes téréphtalates ou les polystyrènes.

L'invention a encore pour objet un procédé pour réaliser un embout d'application tel qu'il vient d'être décrit qui comprend les étapes suivantes :
- assembler un moule pour délimiter une empreinte;
- injecter une quantité de matériau thermoplastique dans l'empreinte de manière à la remplir;
- déplacer au moins une pièce mobile du moule de manière à augmenter le volume de l'empreinte;
- injecter un gaz dans l'empreinte de sorte que le matériau thermoplastique se répartisse dans le volume augmenté de l'empreinte et qu'une cavité interne soit formée à l'intérieur du matériau injecté de manière à former la chambre de répartition;
- démouler.

Selon un mode de réalisation particulier, on injecte le gaz par une tête d'injection positionnée dans le moule de manière telle que le démoulage de ladite tête d'injection forme l'orifice de sortie. Selon ce mode de réalisation, la pièce mobile du moule est destinée à délimiter en partie la paroi de la chambre de répartition, à l'opposé de la surface d'application.

Selon un autre mode de réalisation, on injecte le gaz par une tête d'injection positionnée dans le moule de manière telle que le démoulage de la tête d'injection forme le passage d'entrée dans la chambre de répartition. Selon ce mode de réalisation, la pièce mobile est destinée à délimiter en partie la paroi de la chambre de répartition correspondant à la surface d'application.

L'invention a encore pour objet un ensemble de conditionnement et d'application d'un produit qui comprend
- un récipient à paroi compressible contenant le produit à appliquer;
- un embout d'application, tel qu'il a été décrit précédemment, monté sur le récipient.

Le récipient peut être un tube qui se termine par un col ouvert sur lequel est fixé l'embout d'application.

L'ensemble de conditionnement et d'application peut également comprendre un capuchon de fermeture destiné à fermer l'(les)orifice(s) de sortie du produit. Le capuchon comprend avantageusement une paroi de forme sensiblement complémentaire de la surface extérieure de l'embout qu'elle est destinée à coiffer. La paroi est avantageusement munie d'au moins un picot prévu pour s'insérer dans l'orifice de sortie afin de le fermer de façon sensiblement étanche au produit.

L'invention est particulièrement utile pour le conditionnement d'un produit cosmétique ou de soin; notamment un produit déodorant.

L'invention consiste, mis à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- la figure 1 illustre une vue éclatée d'un mode de réalisation d'un ensemble de conditionnement et d'application selon l'invention;
- la figure 2 représente une coupe axiale partielle de l'ensemble illustré à la figure 1;
- la figure 3 représente une coupe axiale partielle de l'ensemble représenté à la figure 2 selon le plan III-III;
- les figures 4A-4C représentent les étapes d'un premier mode de réalisation d'un procédé de fabrication de l'embout d'application selon l'invention; et
- la figure 5 représente, avant démoulage, l'embout d'application réalisé selon un deuxième mode de réalisation d'un procédé de fabrication de l'embout d'application selon l'invention.

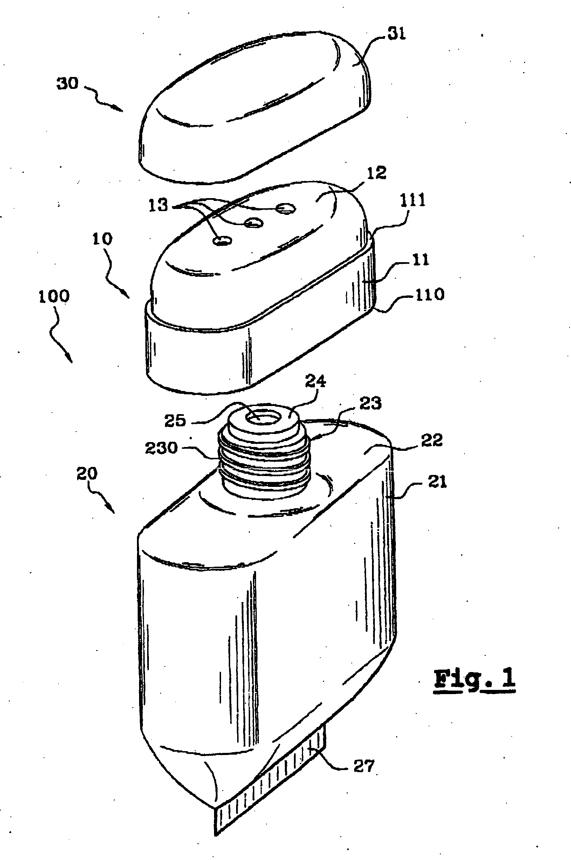

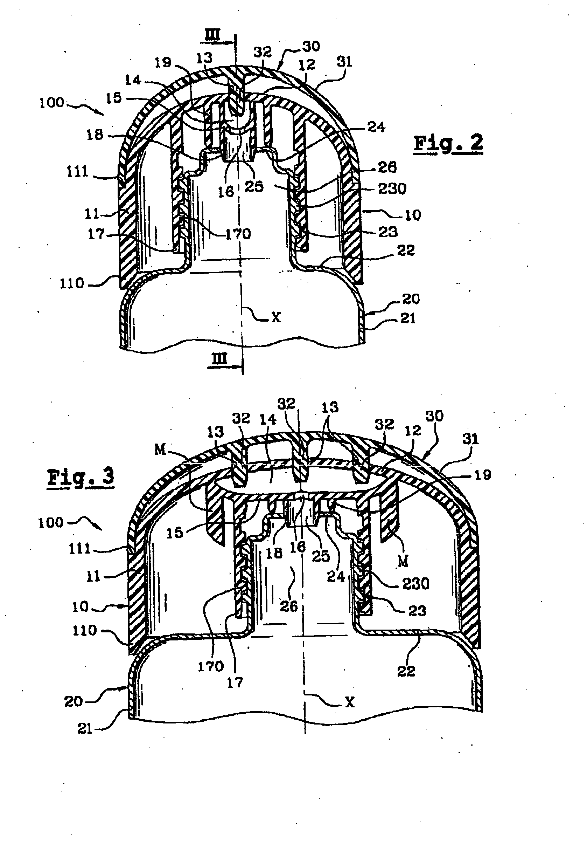

On a représenté sur les figures 1 à 3 un ensemble de conditionnement et d'application 100 qui comprend un récipient 20 sous forme de tube surmonté d'un embout d'application 10 fermé par un capuchon amovible 30. Le tube 20 contient un produit crémeux ou pâteux destiné à être appliqué sur une surface à traiter. Il s'agit par exemple d'un produit déodorant destiné à être appliqué sur les aisselles.

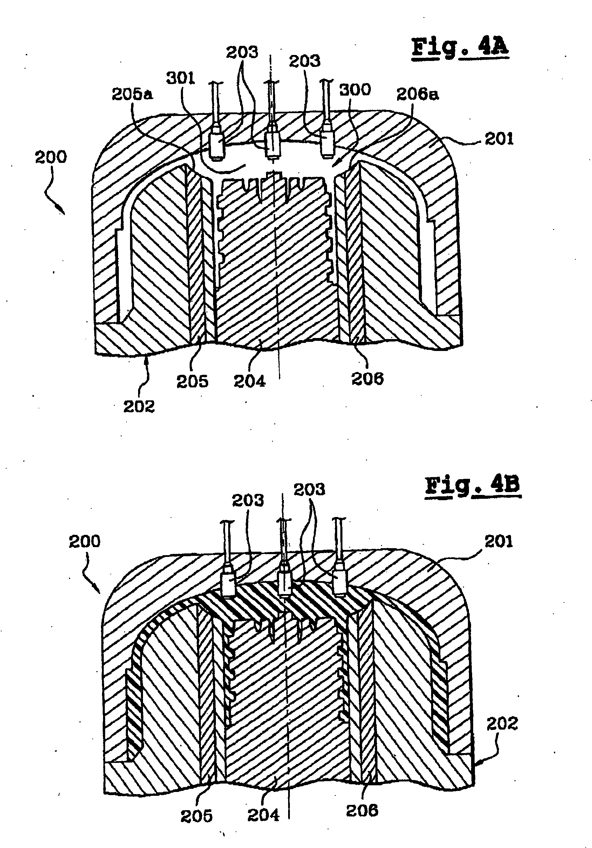

Le tube 20 comporte un corps 21 d'axe X, sensiblement cylindrique dans sa portion supérieure et de section transversale sensiblement ovale. A la figure 2, le corps 21 est présenté selon le grand axe de la section transversale ovale alors qu'à la figure 3, il est représenté selon le petit axe.

Le corps 21 est formé à partir d'une jupe cylindrique à l'extrémité supérieure de laquelle est soudée une tête constituée d'un épaulement 22 surmonté d'un col 23. Le col 23 est pourvu d'un filetage extérieur 230, apte à coopérer avec un filetage complémentaire 170 de l'embout d'application. Le col se termine par une paroi transversale 24 au centre de laquelle est formée une ouverture 25. Le col est traversé d'un canal central 26 de distribution qui débouche par l'ouverture 25. L'extrémité inférieure de la jupe formant le corps 21 du tube située à l'opposé du col 23, est pincée et thermosoudée de manière à obtenir un fond rectiligne 27.

Le tube 20 est souple, c'est à dire compressible dans la zone du corps 21, tandis que la tête formée par l'épaulement et le col est sensiblement rigide, dû à une épaisseur plus importante de matériau par rapport à l'épaisseur du matériau formant le corps 21. La différence de rigidité entre le corps et la tête peut résulter, également, du choix de la nature des matériaux, lorsqu'on réalise un tube complexe en deux matériaux différents. De préférence, le tube est réalisé en polyéthylène ou un autre matériau thermoplastique similaire. De façon plus classique, il peut être réalisé en aluminium ou en étain. Dans ce dernier cas, le fond rectiligne 27 est obtenu par pliage. Le corps 21, le cas échéant, peut être réalisé par une structure multicouche, par exemple, plastique/métal/plastique.

Le tube 20 est surmonté d'un embout d'application 10 d'axe X. L'embout d'application 10 selon l'invention comprend une paroi extérieure latérale 11 s'étendant axialement, ouverte dans sa partie inférieure 110. La paroi latérale 11 se rejoint dans sa partie supérieure par une paroi transversale bombée. Cette paroi transversale constitue la surface d'application 12. La section transversale de la paroi latérale 11 est de forme sensiblement ovale et correspond sensiblement à celle de la partie supérieure du tube, de sorte que lorsque l'embout est monté sur le tube, la paroi latérale 11 s'étend sensiblement dans le prolongement de la paroi du tube 20. La paroi extérieure latérale 11 présente un décrochement 111 qui permettra, comme on le verra en détail ultérieurement de positionner le capuchon 30.

Trois orifices de sortie du produit 13 débouchent à la surface d'application 12. Ils sont avantageusement alignés selon le plus grand axe de la section transversale ovale de l'embout'de manière à bien se répartir sur la surface d'application. A l'intérieur de l'embout, les orifices 13 débouchent dans une chambre de répartition 14 formée, d'une part, par une partie de la paroi transversale bombée constituant la surface d'application 12 et, d'autre part, par une paroi transversale intérieure 15, concave vers la surface d'application. La chambre 14 est de forme allongée et s'étend également selon le plus grand axe de la section transversale ovale de l'embout. La paroi transversale intérieure 15 délimitant la chambre est traversée par un passage 16 formé dans l'axe X de l'embout, qui permet l'entrée du produit provenant du tube 20 dans la chambre de répartition. Selon ce mode de réalisation, deux des trois orifices 13 sont formés selon un axe distinct de l'axe X du passage 16 et l'orifice central est d'axe X.

L'embout 10 comprend également une jupe de fixation 17 qui permet la fixation de l'embout sur le tube 20. La jupe de fixation est une jupe cylindrique de révolution qui s'étend en partie depuis la paroi transversale extérieure bombée 12 et en partie depuis la paroi transversale intérieure 15 autour du passage 16. La jupe de fixation 17 comprend un filetage 170 sur sa paroi interne qui est destiné à coopérer avec le filetage 230 du col 23 du tube de manière à permettre le vissage de l'embout sur le tube.

L'embout est également muni d'une jupe d'étanchéité 18, d'axe X, formée autour du passage 16, à l'intérieur de la jupe de fixation 17. La jupe d'étanchéité 18 est prévue pour s'insérer dans l'ouverture 25 du tube et présente un diamètre légèrement inférieur à celui de l'ouverture de manière à venir en contact avec le bord du tube délimitant l'ouverture 25. Ainsi, sensiblement tout le produit provenant du tube est acheminé dans la chambre de répartition. On évite ainsi que du produit ne s'écoule dans le filetage de la jupe de fixation. Une seconde jupe 19 est prévue autour de la première pour venir en butée contre la paroi transversale entourant l'ouverture du col.

Comme on le verra en détail par la suite, l'embout est obtenu de moulage à partir d'une seule pièce, par exemple d'un polypropylène.

Un capuchon de fermeture 30 est prévu pour fermer les orifices de sortie du produit 13 en position de stockage de l'ensemble. Le capuchon 30 comprend une paroi 31 de forme sensiblement complémentaire de la paroi transversale bombée 12 qu'elle coiffe lorsque le capuchon est monté sur l'embout. Dans cette position, le capuchon vient en butée contre le décrochement 111, formé dans la paroi latérale 11 de l'embout, et vient serrer l'embout à cette hauteur. Trois picots 32 s'étendent axialement depuis l'intérieur de la paroi 31. Ces picots sont configurés et positionnés de manière telle qu'ils s'insèrent chacun dans un orifice de sortie 13 pour venir le fermer de façon sensiblement étanche au produit.

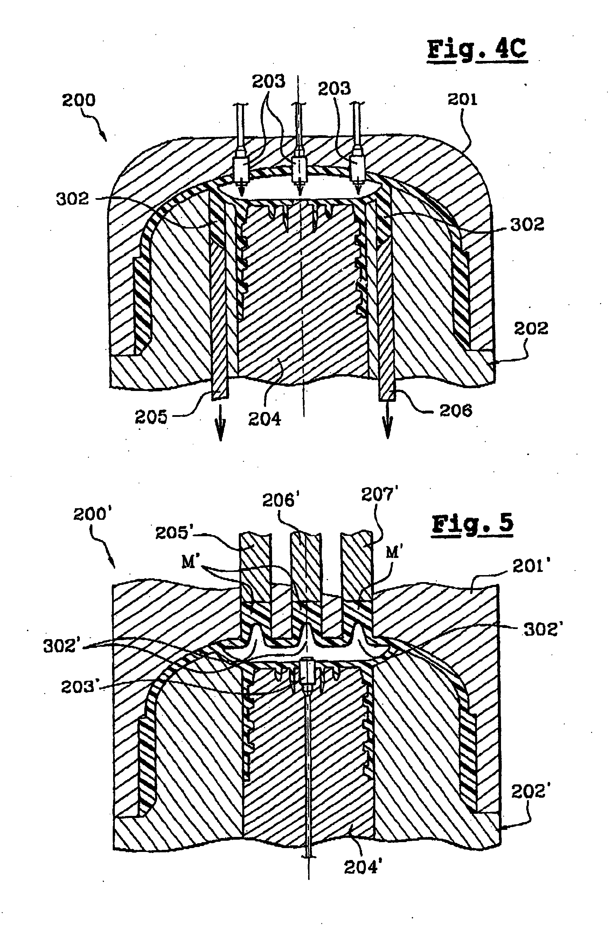

Pour réaliser l'embout selon un mode préféré de l'invention, on utilise la technique de moulage par injection de matière thermoplastique assistée d'une injection de gaz. Les étapes du procédé de fabrication sont représentées aux figures 4A à 4C.

Le moule 200 utilisé comprend une partie creuse 201 destinée à délimiter la surface externe de l'embout et un noyau 202 destiné à délimiter la surface interne de l'embout. La partie creuse 201 et le noyau 202 s'insèrent l'un dans l'autre et sont mobiles l'un par rapport à l'autre selon un mouvement axial pour permettre le démoulage. En position assemblée, comme on l'a représenté à la figure 4A, le moule délimite une empreinte 300 qui correspond sensiblement à la forme de l'embout, si ce n'est qu'aucune portion de moule n'est prévue pour délimiter la paroi interne de la chambre de répartition 14. A ce niveau, une simple cavité 301 est prévue et délimitée en partie par le noyau et par la partie creuse. La partie creuse 201 est munie de trois têtes d'injection de gaz 203 qui débouchent dans l'empreinte 300, et plus particulièrement dans la cavité 301. Le noyau 202 comprend une portion centrale 204, mobile par rapport au noyau principal 202, et prévue pour délimiter la jupe de fixation filetée 17. La portion centrale 204 délimite également en partie la surface externe de la paroi transversale interne 15 délimitant la chambre 14. A l'intérieur du noyau principal 202, on prévoit deux pièces coulissantes 205 et 206 dont chaque extrémité 205a et 206a délimitent partiellement la cavité 301 destinée à former la chambre de répartition.

Après avoir assemblé le moule, on injecte la matière thermoplastique dans l'empreinte 300, par une tête d'injection non représentée. L'empreinte 300, et en particulier la cavité 301, est entièrement remplie de matière comme on le voit à la figure 4B.

Avant que le matériau thermoplastique ne soit totalement refroidi, on déplace les pièces coulissantes 205 et 206 de manière à augmenter le volume total de l'empreinte 300 en créant des espaces libres supplémentaires 302. On injecte alors de l'air, ou tout autre gaz, par les têtes d'injection 203, de manière à pousser la matière présente dans la cavité 301 vers l'espace vide disponible, à savoir vers les espaces libres 302. La matière qui est en contact avec le moule se refroidissant au contact de celui-ci, c'est la matière présente au centre de la cavité 301, plus chaude et donc plus fluide, qui est poussée vers les espaces libres 302. On forme ainsi la chambre de répartition 14. Le volume des espaces libres 302 est bien entendu calculé en fonction du volume interne de la chambre que l'on veut obtenir. Le produit qui s'est écoulé dans les espaces libres 302 forme des masselottes M.

Une fois que la matière est refroidie, on ouvre le moule en faisant coulisser la partie creuse 201 par rapport au noyau 202, et on dévisse la portion centrale 204 du noyau qui constitue le filetage de la jupe de fixation. Le démoulage des têtes d'injection de gaz 203 permet d'obtenir les orifices de sortie du produit 13 dont le bord est ainsi parfaitement délimité. Ainsi, de tels orifices peuvent être facilement fermés de manière étanche. Le passage d'entrée 16 dans la chambre de répartition est obtenu soit par perçage, soit directement lors de l'injection d'air, en injectant de l'air avec suffisamment de pression par la tête d'injection 203 centrale, située en regard de la zone dans laquelle est formé le passage 16, pour enlever la matière. On obtient ainsi l'embout représenté aux figures 1 à 3.

Selon une variante du procédé de réalisation dont l'étape avant démoulage est illustrée à la figure 5, une seule tête d'injection de gaz 203' est prévue. Elle est cette fois disposée selon l'axe X, dans la portion centrale 204' du noyau. Trois pièces coulissantes 205', 206' et 207' sont cette fois prévues dans la partie creuse 201' du moule. Selon cette variante, le démoulage de la tête d'injection permet d'obtenir le passage d'entrée 16. En outre, des masselottes M' sont formées cette fois sur la surface d'application 12. En utilisant un tel moule, on prévoit que chaque pièce coulissante libère un espace libre 302' suffisant pour que le produit qui s'écoule dedans ne le remplisse pas totalement mais laisse un volume vide à l'intérieur. Ainsi, les masselottes M' sont creuses de sorte qu'après le démoulage, on les coupe afin d'obtenir une surface d'application 12 lisse et des orifices de sortie du produit 13.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

## Revendications

1. Embout d'application (10) d'un produit destiné à être montré sur un récipient (20) contenant le produit à appliquer, ledit embout comprenant des moyens de fixation (17) destinés à fixer l'embout sur le récipient, une portion applicatrice comportant une chambre de répartition (14) délimitant au moins en partie une surface d'application (12), et étant apte à communiquer avec l'intérieur du récipient via un passage d'entrée d'axe X, ladite chambre étant en outre munie d'au moins un orifice de sortie (13) du produit débouchant sur la surface d'application,
**caractérisé en ce que** la chambre de répartition (14) comporte une paroi transversale intérieure (15) traversée par le passage d'entrée (16), **en ce que** l'axe de l'orifice de sortie (13) est distinct de l'axe X du passage d'entrée (16), et **en ce que** la portion applicatrice est obtenue de moulage à partir d'une seule pièce.

2. Embout d'application selon la revendication 1, **caractérisé en que** surface d'application (12) est bombée.

3. Embout d'application selon l'une quelconque des revendications précédentes, **caractérisé en ce que** les moyens de fixation (17) sont constitués par une jupe de fixation cylindrique destinée à être fixée sur le récipient (20).

4. Embout d'application selon la revendication 3, **caractérisé en ce que** la jupe de fixation comprend un filetage (170) sur sa paroi intérieure destiné à coopérer avec un filetage (230) prévu sur la paroi extérieure du récipient (20), notamment sur un col (23) formé à une extrémité du récipient.

5. Embout d'application selon l'une quelconque des revendications précédentes, **caractérisé en ce que** le passage d'entrée (16) est entouré par une jupe d'étanchéité (18) destinée à s'insérer dans une ouverture (25) du récipient (20).

6. Embout d'application selon l'une quelconque des revendications précédentes, **caractérisé en ce qu**'il est d'axe longitudinal X et que sa section transversale est de forme ovale.

7. Embout d'application selon l'une quelconque des revendications précédentes, **caractérisé en ce qu**'il comprend au moins deux orifices de sortie (13).

8. Embout d'application selon les revendications 6 et 7, **caractérisé en ce que** les orifices de sortie (13) du produit sont formés le long du plus grand axe de la section transversale de l'embout.

9. Embout d'application selon l'une quelconque des revendications précédentes, **caractérisé en ce qu**'il est obtenu de moulage d'un matériau thermoplastique à partir d'une seule pièce.

10. Embout d'application selon la revendication 9, **caractérisé en ce que** le matériau thermoplastique est choisi parmi les polypropylènes, les polyéthylènes, les polyéthylènes téréphtalates ou les polystyrènes.

11. Embout d'application selon l'une quelconque des revendications précédentes, **caractérisé en ce que** la (14) est formée paroi transversale intérieure (15) est concave vers la surface d'application (12).

12. Procédé pour réaliser un embout d'application selon l'une quelconque des revendications précédentes comprenant les étapes suivantes :
- assembler un moule (200; 200') pour délimiter une empreinte (300; 300');
- injecter une quantité de matériau thermoplastique dans l'empreinte (300') de manière à la remplir;
- déplacer au moins une pièce mobile (205, 206; 205', 206', 207') du moule (200; 200') de manière à augmenter le volume de l'empreinte (300; 300');
- injecter un gaz dans l'empreinte (300; 300') de sorte que le matériau thermoplastique se répartisse dans le volume augmenté de l'empreinte et qu'une cavité interne soit formée à l'intérieur du matériau injecté de manière à former la chambre de répartition (14);
- démouler.

13. Procédé selon la revendication 12, **caractérisé par le fait que** l'on injecte le gaz par une tête d'injection (203) positionnée dans le moule (200) de manière telle que le démoulage de la tête d'injection forme l'orifice de sortie (13).

14. Procédé selon la revendication 13, **caractérisé en ce que** la pièce mobile (205; 206) est destinée à délimiter en partie la paroi de la chambre de répartition (14), à l'opposé de la surface d'application (12).

15. Procédé selon la revendication 12, **caractérisé par le fait que** l'on injecte le gaz par une tête d'injection (203') positionnée dans le moule de manière telle que le démoulage de la tête d'injection forme le passage d'entrée (16).

16. Procédé selon la revendication 15, **caractérisé en ce que** la pièce mobile (205', 206', 207') est destinée à délimiter en partie la paroi de la chambre de répartition (14) correspondant à la surface d'application (12).

17. Ensemble (100) de conditionnement et d'application d'un produit qui comprend :
- un récipient (20) à paroi compressible contenant le produit à appliquer;
- un embout d'application (10), selon l'une quelconque des revendications 1 à 10, monté sur le récipient.

18. Ensemble selon la revendication 17, **caractérisé en ce que**: le récipient (20) est un tube qui se termine par un col (23) ouvert sur lequel est fixé l'embout d'application (10).

19. Ensemble selon l'une quelconque des revendications 17 ou 18, **caractérisé en ce qu**'il comprend en outre un capuchon de fermeture (30) destiné à fermer l'(les)orifice(s) de sortie du produit (13).

20. Ensemble selon la revendication 19, **caractérisé en ce que** le capuchon (30) comprend une paroi (31) de forme sensiblement complémentaire de la surface extérieure de l'embout (10) qu'elle est destinée à coiffer, ladite paroi (31) étant munie d'au moins un picot (32) prévu pour s'insérer dans l'orifice de sortie (13).

21. Utilisation d'un ensemble (100) selon l'une quelconque des revendications 17 à 20 pour le conditionnement et l'application d'un produit cosmétique ou de soin, notamment un produit déodorant.

## Claims

1. Product applicator attachment (10) intended to be mounted on a container (20) containing the product that is to be applied, the said attachment comprising fixing means (17) intended to fix the attachment onto the container; an applicator portion comprising a distribution chamber (14) delimiting, at least in part, an applicator surface (12), and able to communicate with the inside of the container via an inlet passage of axis X, the said chamber also being equipped with at least one product outlet orifice (13) opening onto the applicator surface,
**characterized in that** the distribution chamber (14) comprises an interior transverse wall (15) through which the inlet passage (16) passes, **in that** the axis of the outlet orifice (13) is different from the axis X of the inlet passage (16), and **in that** the applicator portion is obtained by moulding, in a single piece.

2. Applicator attachment according to Claim 1, **characterized in that** the applicator surface (12) is domed.

3. Applicator attachment according to either one of the preceding claims, **characterized in that** the fixing means (17) consist of a cylindrical fixing skirt intended to be fixed onto the container (20).

4. Applicator attachment according to Claim 3, **characterized in that** the fixing skirt comprises a screw thread (170) on its interior wall, the said screw thread being intended to collaborate with a screw thread (230) provided on the exterior wall of the container (20), particularly on a neck (23) formed at one end of the container.

5. Applicator attachment according to any one of the preceding claims, **characterized in that** the inlet passage (16) is surrounded by a sealing skirt (18) intended to fit into an opening (25) of the container (20).

6. Applicator attachment according to any one of the preceding claims, **characterized in that** it is of longitudinal axis X and **in that** its cross section is of oval shape.

7. Applicator attachment according to any one of the preceding claims, **characterized in that** it comprises at least two outlet orifices (13).

8. Applicator attachment according to Claims 6 and 7, **characterized in that** the product outlet orifices (13) are formed along the major axis of the cross section of the attachment.

9. Applicator attachment according to any one of the preceding claims, **characterized in that** it is obtained by moulding a thermoplastic from a single piece.

10. Applicator attachment according to Claim 9, **characterized in that** the thermoplastic is chosen from polypropylenes, polyethylenes, polyethylene terephthalates and polystyrenes.

11. Applicator attachment according to any one of the preceding claims, **characterized in that** the interior transverse wall (15) is concave towards the applicator surface (12).

12. Method for producing an applicator attachment according to any one of the preceding claims, comprising the following steps:
- assembling a mould (200; 200') to delimit a cavity (300; 300');
- injecting a quantity of thermoplastic into the cavity (300') in order to fill it;
- moving at least one moving part (205, 206; 205', 206', 207') of the mould (200; 200') in order to increase the volume of the cavity (300; 300');
- injecting a gas into the cavity (300; 300') so that the thermoplastic spreads out in the increased volume of the cavity and so that an internal void is formed within the injected material, so as to form the distribution chamber (14);
- releasing from the mould.

13. Method according to Claim 12, **characterized in that** the gas is injected via an injection head (203) positioned in the mould (200) in such a way that the demoulding of the injection head forms the outlet orifice (13).

14. Method according to Claim 13, **characterized in that** the moving part (205; 206) is intended to delimit, in part, the wall of the distribution chamber (14) away from the applicator surface (12).

15. Method according to Claim 12, **characterized in that** the gas is injected via an injection head (203') positioned in the mould in such a way that the demoulding of the injection head forms the inlet passage (16).

16. Method according to Claim 15, **characterized in that** the moving part (205', 206', 207') is intended to delimit, in part, the wall of the distribution chamber (14) corresponding to the applicator surface (12).

17. Entity (100) for packaging and applying a product and which comprises:
- a container (20) with compressible walls containing the product that is to be applied;
- an applicator attachment (10) according to any one of Claims 1 to 10, mounted on the container.

18. Entity according to Claim 17, **characterized in that** the container (20) is a tube ending in an open neck (23) onto which the applicator attachment (10) is fixed.

19. Entity according to either one of Claims 17 and 18, **characterized in that** it further comprises a closure cap (30) intended to close the product outlet orifice(s) (13).

20. Entity according to Claim 19, **characterized in that** the cap (30) has a wall (31) of a shape roughly complementing the exterior surface of the attachment (10) over which it is intended to sit, the said wall (31) being fitted with at least one pip (32) designed to fit into the outlet orifice (13).

21. Use of an entity (100) according to any one of Claims 17 to 20 for packaging and applying a cosmetic or care product, particularly a deodorant.

## Patentansprüche

1. Applikatoraufsatz (10) für ein Produkt, der dazu bestimmt ist, auf einen das aufzutragende Produkt enthaltenden Behälter (20) montiert zu werden, wobei der Aufsatz Befestigungsmittel (17) aufweist, die dazu bestimmt sind, den Aufsatz auf dem Behälter zu befestigen, wobei ein Auftragungsabschnitt eine Verteilungskammer (14) aufweist, die zumindest zum Teil eine Auftragungsfläche (12) begrenzt und mit dem Inneren des Behälters über einen Eingangsdurchgang mit einer Achse X kommunizieren kann, wobei die Kammer außerdem mit mindestens eine Austrittsöffnung (13) des Produkts versehen ist, die an der Auftragungsfläche mündet,
**dadurch gekennzeichnet, dass** die Verteilungskammer (14) eine innere Querwand (15) aufweist, die vom Eingangsdurchgang (16) durchquert wird, dass die Achse der Austrittsöffnung (13) sich von der Achse X des Eingangsdurchgangs (16) unterscheidet, und dass der Auftragungsabschnitt durch Formen ausgehend von einem Stück erhalten wird.

2. Applikatoraufsatz nach Anspruch 1, **dadurch gekennzeichnet, dass** die Auftragungsfläche (12) gewölbt ist.

3. Applikatoraufsatz nach einem der vorhergehenden Ansprüche,
**dadurch gekennzeichnet, dass** die Befestigungsmittel (17) aus einer zylindrischen Befestigungsschürze bestehen, die dazu bestimmt ist, am Behälter (20) befestigt zu werden.

4. Applikatoraufsatz nach Anspruch 3, **dadurch gekennzeichnet, dass** die Befestigungsschürze ein Gewinde (170) auf ihrer Innenwand aufweist, das zu bestimmt ist, mit einem Gewinde (230) zusammenzuwirken, das auf der Außenwand des Behälters (20) vorgesehen ist, insbesondere auf einem an einem Ende des Behälters geformten Hals (23).

5. Applikatoraufsatz nach einem der vorhergehenden Ansprüche, **dadurch gekennzeichnet, dass** der Eingangsdurchgang (16) von einer Dichtungsschürze (18) umgeben ist, die dazu bestimmt ist, sich in eine Öffnung (25) des Behälters (20) einzufügen.

6. Applikatoraufsatz nach einem der vorhergehenden Ansprüche, **dadurch gekennzeichnet, dass** er eine Längsachse X hat und dass sein Querschnitt oval ist.

7. Applikatoraufsatz nach einem der vorhergehenden Ansprüche, **dadurch gekennzeichnet, dass** er mindestens zwei Austrittsöffnungen (13) aufweist.

8. Applikatoraufsatz nach den Ansprüchen 6 und 7, **dadurch gekennzeichnet, dass** die Austrittsöffnungen (13) des Produkts entlang der größten Achse des Querschnitts des Aufsatzes geformt sind.

9. Applikatoraufsatz nach einem der vorhergehenden Ansprüche, **dadurch gekennzeichnet, dass** er durch Formen eines thermoplastischen Werkstoffs ausgehend von einem Stück erhalten wird.

10. Applikatoraufsatz nach Anspruch 9, **dadurch gekennzeichnet, dass** der thermoplastische Werkstoff ausgewählt wird unter den Polypropylenen, den Polyethylenen, den Polyethylenterephthalaten oder den Polystyrolen.

11. Applikatoraufsatz nach einem der vorhergehenden Ansprüche, **dadurch gekennzeichnet, dass** die innere Querwand (15) zur Auftragungsfläche (12) hin konkav ist.

12. Verfahren zur Herstellung eines Applikatoraufsatzes nach einem der vorhergehenden Ansprüche, das die folgenden Schritte aufweist:
- Zusammenbau eines Formwerkzeugs (200; 200'), um einen Formhohlraum (300; 300') zu begrenzen;
- Einspritzen einer Menge von thermoplastischem Werkstoff in den Formhohlraum (300'), um ihn zu füllen;
- Verschieben mindestens eines beweglichen Bauteils (205, 206; 205', 206', 207') des Formwerkzeugs (200; 200'), um das Volumen des Formhohlraums (300; 300') zu vergrößern;
- Einspritzen eines Gases in den Formhohlraum (300; 300'), damit der thermoplastische Werkstoff sich in dem vergrößerten Volumen des Formhohlraums verteilt und damit ein innerer Hohlraum im Inneren des eingespritzten Werkstoffs geformt wird, um die Verteilungskammer (14) zu formen;
- Ausformen.

13. Verfahren nach Anspruch 12, **dadurch gekennzeichnet, dass** das Gas über einen Einspritzkopf (203) eingespritzt wird, der in dem Formwerkzeug (200) so positioniert wird, dass das Ausformen des Einspritzkopfes die Austrittsöffnung (13) formt.

14. Verfahren nach Anspruch 13, **dadurch gekennzeichnet, dass** das bewegliche Bauteil (205; 206) dazu bestimmt ist, zum Teil die Wand der Verteilungskammer (14) entgegengesetzt zur Auftragungsfläche (12) zu begrenzen.

15. Verfahren nach Anspruch 12, **dadurch gekennzeichnet, dass** das Gas über einen Einspritzkopf (203') eingespritzt wird, der so in dem Formwerkzeug positioniert wird, dass das Ausformen des Einspritzkopfes den Eingangsdurchgang (16) formt.

16. Verfahren nach Anspruch 15, **dadurch gekennzeichnet, dass** das bewegliche Bauteil (205', 206', 207') dazu bestimmt ist, zum Teil die Wand der Verteilungskammer (14) entsprechend der Auftragungsfläche (12) zu begrenzen.

17. Einheit (100) zur Verpackung und zum Auftragen eines Produkts, die aufweist:
- einen Behälter (20) mit zusammendrückbarer Wand, der das aufzutragende Produkt enthält;
- einen Applikatoraufsatz (10) nach einem der Ansprüche 1 bis 10, der auf den Behälter montiert ist.

18. Einheit nach Anspruch 17, **dadurch gekennzeichnet, dass** der Behälter (20) eine Tube ist, die in einem offenen Hals (23) endet, auf dem der Applikatoraufsatz (10) befestigt wird.

19. Einheit nach einem der Ansprüche 17 oder 18, **dadurch gekennzeichnet, dass** sie außerdem eine Verschlusskappe (30) aufweist, die dazu bestimmt ist, die Austrittsöffnung(en) (13) des Produkts zu verschließen.

20. Einheit nach Anspruch 19, **dadurch gekennzeichnet, dass** die Kappe (30) eine Wand (31) mit einer zu der Außenfläche des Aufsatzes (10), auf den sie aufgesetzt werden soll, im Wesentlichen komplementären Form aufweist, wobei die Wand (31) mit mindestens einem Zäckchen (32) versehen ist, das vorgesehen ist, um sich in die Austrittsöffnung (13) einzufügen.

21. Verwendung einer Einheit (100) nach einem der Ansprüche 17 bis 20 für die Verpackung und das Auftragen eines Kosmetik- oder Pflegeprodukts, insbesondere eines deodorierenden Produkts.
